# EUROPEAN PATENT APPLICATION

(11) **EP 1 348 681 A2**
(43) Date of publication of application: **01.10.2003**
(21) Application number: 03251885.4
(22) Date of filing: 26.03.2003
(51) Int. Cl.: C04B 38/10, C04B 35/10

(54) **Production method of lightweight ceramic molding**

(30) Priority: 27.03.2002 JP 2002088250
(71) Applicant: National Institute of Advanced Industrial Science and Technology, Tokyo 100-8921 (JP)
(72) Inventor: Kishi, Kasushi c/o National Institute of Advanced, Shuku-machi Tosu-shi Saga-ken 841-0052 (JP); Maeda, Eishi c/o National Institute of Advanced, Shuku-machi Tosu-shi Saga-ken 841-0052 (JP); Tani, Eiji c/o National Institute of Advanced, Shuku-machi Tosu-shi Saga-ken 841-0052 (JP)
(74) Representative: Evans, Marc Nigel

(57) **Abstract**

A production method of a large-size or intricately shaped lightweight ceramic molding having a bulk density of about 0.3 g/cm³ or less and having high heat resistance is accomplished by the following method.

A water slurry obtained by mixing a ceramic raw material powder and an aluminum-hydroxide sol solution is foamed to produce a foamed slurry, the foamed slurry is filled in a mold, dried and calcined to produce a calcined preform, a plurality of calcined preforms are joined using the foamed slurry to produce one molding body or the calcined preform and the foamed slurry are filled in combination in a new mold and dried to produce one molding body, and the molding is sintered to obtain a lightweight ceramic molding.

## Description

The invention relates to a production method of a lightweight ceramic molding. More specifically, the invention relates to a production method suitable for producing a large-size or intricately shaped lightweight ceramic molding having high heat resistance.

Lightweight ceramic moldings are widely used as a building material or a constructing material. Examples of methods for producing moldings include: (1.) a production method where a foamed urethane preform or the like having a network structure with continuous pores is impregnated and attached with a slurry having mixed therein a ceramic raw material powder, an organic binder and the like and then the preform is dried and heated to perform sintering while burning and removing the organic components (see, JP-B-56-36143 (the term "JP-B" as used herein means an "examined Japanese patent publication"); (2.) a production method where a urethane foaming material is mixed in a slurry containing a ceramic raw material powder, an organic binder and the like to cause foaming and the foamed slurry is solidified and then heated to perform sintering while burning and removing the organic components (see, JP-A-60-195073 (the term "JP-A" as used herein means an "unexamined published Japanese patent application") and JP-A-5-270939); (3.) a production method where a hydrophobic resin binder is emulsified in a dispersion medium containing a ceramic raw material powder by adding a surfactant to form an emulsion and the emulsion is foamed, solidified and then heated to perform sintering while burning and removing the organic components (see, JP-A-11-310482); and (4.) a method where a filler which is burned and evaporated to provide voids in the sintering process, such as plastic beads, is contained in a slurry, and the slurry is molded, dried and then sintered (see, JP-A-11-236379).

However, these methods have a problem that since a large amount of an organic material is added as a binder or a filler, either or both cracking on the surface and cracking occurring internally which cannot easily be seen from the outside is readily caused due to gas generation from the organic material and differential thermal expansion between the ceramic moiety and the organic material in the process of burning and removing the organic material before the ceramic powder is sintered.

Furthermore, in the case of a lightweight cellular material, the ceramic cellular structure constituting it becomes thin and lacks strength. As a result, the crazing or cracking gives rise to a serious defect and even the cellular structure is often broken.

Particularly, in the case of producing a large-size lightweight ceramic molding, the cellular body comprising a ceramic powder which is weak in its bonding must support its entire self weight; therefore, the above-described defect brings about a more serious detrimental effect.

If the molding is made lightweight merely by incorporating many cells, the molding is reduced in the strength, and this causes a problem. For example, crazing is generated due to shrinkage during drying, or the molding is broken at the time of release from the mold. In order to avoid such problems, if the content of the organic binder is increased to elevate the cellular strength, this incurs the above-described problem such as generation of a gas accompanying the burning of organic material. For increasing the cellular strength without using an organic binder, a slurry having a high solid content must be used, and this disadvantageously sacrifices the lightweight formation.

As such, conventional production methods of a lightweight ceramic molding not only have these problems but also are unsuccessful in obtaining a lightweight ceramic molding having a bulk density of 0.3 g/cm³ or less.

Under these circumstances, the present inventors made extensive investigations to solve the problems in conventional production methods and proposed a method for producing a lightweight ceramic molding in Japanese Patent Application No. 2000-305334, where a dilute aluminum-hydroxide sol solution is used as the binder and after an inorganic powder is added thereto while controlling the amount, the obtained slurry is foamed, dried and then sintered.

However, this method has a problem. Since a dilute slurry is foamed and molded, in obtaining a molding with a measurable height, the slurry sags due to its self weight during drying, and the cellular body becomes non-uniform. Furthermore, in the case of a molding having a large bottom area, since the preform after drying is small in its strength, it may be broken, for example, at the conveyance into a sintering furnace. Particularly, in the case of reducing the bulk density, a large-size sintered body cannot be easily obtained.

An object of the present invention is to overcome those problems in conventional production methods and problems in the method previously proposed by the present inventors and provide a production method for obtaining an ultra-lightweight ceramic molding having a bulk density of 0.3 g/cm³ or less, preferably 0.2 g/cm³ or less.

Another object of the present invention is to provide a production method suitable for producing a large-size or intricately shaped lightweight ceramic molding.

These objects can be attained by a method for producing a lightweight ceramic molding according to the present invention, comprising adding a foaming agent to a water slurry obtained by mixing a ceramic raw material powder and an aluminum-hydroxide sol solution, and stirring it to cause foaming and thereby produce a foamed slurry; filling the foamed slurry in a mold and drying and then calcining it to produce a calcined preform; joining a plurality of the calcined preforms using the foamed slurry to produce one molding body, or filling the calcined preform and the foamed slurry in combination in a new mold and drying it to produce one molding body; and sintering the molding.

According to a preferred embodiment of the present invention, the calcination is performed at a temperature of 800 to 1,200°C and the sintering is performed at a temperature of 1,200 to 1,800°C.

According to another preferred embodiment of the present invention, the water slurry comprises from 50 to 300 parts by mass of an aluminum-hydroxide sol solution having a concentration of 0.25 to 5 mass% in terms of an alumina solid content, per 100 parts by mass of the ceramic raw material powder, and the foaming agent is used in an amount of 0.25 to 5 parts by mass per 100 parts by mass of the aluminum-hydroxide sol solution.

According to still another preferred embodiment of the present invention, the aluminum-hydroxide sol solution is an aqueous solution obtained by hydrolyzing and then peptizing aluminum alkoxide.

In the production method of a lightweight ceramic molding according to the present invention, a foaming agent is added to a water slurry obtained by mixing a ceramic raw material powder and an aluminum-hydroxide sol solution and then the slurry is stirred, whereby a foamed slurry is produced. The foamed slurry is filled into a mold, dried and calcined, whereby a calcined preform is produced.

The ceramic used here as a raw material is not particularly limited and may be appropriately selected from ceramics heretofore used in the production of a lightweight ceramic molding. Examples of these ceramics include alumina, silica, silicon nitride, silicon carbide, zirconia and mullite.

The ceramic raw material is used as a powder having an average particle size of 0.2 to 5.0 µm. If the average particle size of this powder is less than 0.2 µm, the specific surface area of the powder may increase and the slurry may be increased in the viscosity and may become difficult to handle, whereas if the average particle size exceeds 5.0 µm, the powder is precipitated and separated in the slurry formed and a homogeneous molding may be difficult to obtain.

The ceramic raw material powder and an aluminum-hydroxide sol solution are mixed, whereby a water slurry is produced.

The aluminum-hydroxide sol solution is gelled and solidified by drying to play a role of binding the ceramic raw material powder and at the same time, is changed into alumina by sintering, which is one component of the ceramic.

Accordingly, unlike conventional methods using an organic binder, the production method of the present invention is free of such a problem that crazing or cracking is readily generated due to differential thermal expansion between the gas generated or organic material and the ceramic moiety in the process of burning and removing the organic material before the ceramic powder is sintered.

The aluminum-hydroxide sol solution for use in the present invention is suitably an aqueous solution obtained by hydrolyzing and then peptizing aluminum alkoxide. The aluminum-hydroxide sol solution obtained by this method is easily formed into a dense and firm gel by drying, and therefore, the obtained molding can have a higher cellular strength than that using an aluminum-hydroxide sol solution obtained by other methods.

In the aluminum-hydroxide sol solution for use in the water slurry, if the alumina solid content is too high, the slurry is excessively increased in viscosity and cannot hold a sufficiently large amount of cells. Whereas if the alumina solid content is too low, the activity as the binder becomes weak, and the molding may collapse.

In order to hold cells in a large amount as much as possible and to ensure a strength sufficiently high to form a lightweight molding, the alumina hydroxide sol solution is suitably used by adjusting the concentration in terms of alumina solid content to 0.25 to 5 mass%, preferably from 0.5 to 2 mass%.

Also, for obtaining a lightweight ceramic molding having a bulk density of 0.3 g/cm³ or less, the aluminum-hydroxide sol solution is suitably used in the range from 50 to 300 parts by mass per 100 parts by mass of the ceramic raw material powder.

A foaming agent is added to the water slurry, thereafter, the slurry is foamed by mechanical stirring to produce a foamed slurry, and the foamed slurry is cast in a mold and then formed.

The foaming agent may be a natural foaming agent such as saponin and casein, or a synthetic foaming agent such as triethanolamine dodecyl sulfate, polyoxyethylene dodecyl sulfate and a silicone-based foaming agent. In the water slurry, the foaming agent is preferably added in an amount of 0.25 to 5 parts by mass per 100 parts by mass of the aluminum-hydroxide sol solution.

Furthermore, in the water slurry, a sintering aid, an inhibitor against grain growth and the like may be added in the form of powder or a water-soluble salt, if desired, in addition to the foaming agent.

When a sublimable substance is coated as a parting compound on the inner surface of the mold before casting the foamed slurry into the mold, a space is generated between the mold and the gelled preform after sublimation of the sublimable substance; therefore, the preform can be shrunk or dried while keeping the shape.

Examples of the sublimable substance which can be used include p-dichlorobenzene and naphthalene.

The foamed slurry filled in the mold is dried in that state to give a foamed preform. The drying time is usually from 1 to 48 hours.

The present inventors have confirmed that even if the foamed preform produced as such is calcined at 800 to 1,200°C, shrinkage scarcely occurs.

The foamed preform is scarcely shrunk even if calcined, because although the aluminum hydroxide as the binder is dehydrated and gradually changes into high-temperature type alumina to cause sintering, the amount thereof is small, and the ceramic powder occupying the majority of the cellular body of the dried product acts as an aggregate for preventing the shrinkage.

The aluminum hydroxide as the binder changes into alumina by calcination and increases its strength. Therefore, the preform after calcination is increased in its strength and is very easy to handle.

The calcined preform is preferably produced to work out to a divided part of a large-size or intricately shaped molding of the target size. The size of each of the divided molds is set such that each of the molds should be uniform due to the self weight of the foamed slurry when each of the divided molds are dried.

A plurality of calcined preforms produced as such are joined with each other using the foamed slurry, whereby one large-size or intricately shaped molding body is produced.

Alternatively, the calcined preform and the foamed slurry are filled in combination in a new mold and dried, whereby one large-size or intricately shaped molding body is produced.

In the case where the calcined preform and the foamed slurry are filled in combination in a new mold and dried to produce one large-size or intricately shaped molding body, the preform after calcination acts as an aggregate and can prevent shrinkage during drying.

In this case, it may be possible to set one calcined preform in a new mold, fill the foamed slurry in the mold and dry the slurry, but it may also be possible to join a plurality of calcined preform members using the foamed slurry, set the joined body in a new mold, fill the foamed slurry in the mold and dry the slurry.

When one large-size or intricately shaped molding body is produced by joining a plurality of calcined preforms each working out to a divisional part with each other using a foamed slurry having the same composition or by filling the calcined preform and the foamed slurry in combination in a new mold and drying the slurry, the foam is the same as that of the preform before drying and the percentage shrinkage at the sintering is the same; therefore, defects such as cracking are not generated at all on the junction surface. Furthermore, the foamed slurry as the bond and the calcined preform each becomes a ceramic molding having the same properties after sintering, so that the obtained large-size or intricately shaped ceramic molding can be the same as that which is formed and sintered as one molding body from the beginning.

The bond for use in joining ceramics is usually a slurry obtained by suspending ceramic powder in a binder; however, since the ceramic molding is a porous material, such a bond permeates into the inside, and no joining effect can be obtained. On the other hand, the stably foamed slurry does not permeate into the porous material in view of its properties and can keep the initial state until drying; therefore, this slurry can act as an effective bond. Furthermore, no matter how many times calcined at the same temperature, the molding after calcination is not shrunk, so that when this foamed slurry is used as the bond, the defective portion of the molding can be repaired by repeating the drying and calcination, or a molding having a different shape can be produced by forming the molding into a new shape and again filling the foamed slurry.

The thus-produced one large-size or intricately shaped molding body is sintered at a temperature of 1,200 to 1,800°C.

In the method previously proposed by the present inventors for obtaining a large-size molding, the molding must be slowly heated and dried over a long period of time so as to prevent generation of cracking due to a difference in the shrinkage between the vicinity of the surface and the inside during rapid drying. However, in the method of the present invention, the calcined preform can be produced in a small size as a divisional part of the large-size or intricately shaped molding, and therefore, the drying time can be shortened. Furthermore, the divisional part is in a size on the order of not causing non-uniformity due to self weight of the foamed slurry; therefore, the problem that the slurry sags due to its self weight during drying and the cellular body becomes non-uniform can be eliminated.

In addition, in the method of the present invention, aluminum hydroxide as the binder changes into alumina by calcination and increases in its strength, and the preform after calcination is increased in its strength and is very easy to handle; therefore, the problem that the preform after drying is small in its strength and may be broken, for example, at the conveyance into a sintering furnace making a large-size sintered body difficult to obtain, can be eliminated.

### Examples

While the present invention will now be described in greater detail below by referring to various Examples, it should be understood, however, that the present invention is not construed as limiting the invention in any way. Unless otherwise indicated, all the parts and percents are by weight.

Example 1 - Aluminum iso-propoxide (8.0 g) was added to 100 ml of distilled water at 80°C and hydrolyzed by stirring. After the hydrolysis, the resulting white turbid solution was cooled and adjusted to a pH of 2 by adding dilute hydrochloric acid while stirring. Thereafter, the solution was peptized by continuously stirring for 4 hours to produce a transparent aluminum-hydroxide sol solution. This aqueous solution had a concentration of 2 mass% in terms of the alumina solid content. To this solution, 100 g of alumina powder having an average particle size of 0.2 µm was added and mixed together with silicon nitride balls for 20 hours.

To the slurry after mixing, 10 ml of a 20 wt% saponin solution was added. Then, the slurry was foamed by a household whisk until the volume became 10 times or more to produce a foamed slurry having meringue-like foams.

This foamed slurry was filled in 9 cardboard molds (8 cm × 8 cm × 2 cm), the inside of each mold being previously coated with p-dichlorobenzene. Thereafter, the foamed slurry was dried and then calcined in air at 1,000°C for one hour to obtain 9 calcined preforms. At this time, the preforms were scarcely shrunk by the calcination.

A foamed slurry produced in the same manner as above was spread to a thickness of about 2 mm on a cardboard (25 cm × 25 cm) previously coated with p-dichlorobenzene. On this slurry, 9 calcined preforms produced above were arrayed to form 3 rows and 3 columns while coating the foamed slurry to 1 to 2 mm on the portions coming into contact with each other. Thereafter, the foamed slurry was coated to 1 to 2 mm on the outer peripheral side surfaces of calcined preforms in 3 rows and 3 columns and the outer peripheral side surfaces coated with the foamed slurry were covered with a cardboard (25 cm × 2.4 cm) such that the upper end part of the cardboard protruded upward from the top surface of the calcined preforms in 3 rows and 3 columns.

The entire top surface of the calcined preforms in 3 rows and 3 columns was coated with the foamed slurry to a thickness of about 2 mm and the coated surface was smoothed by a plastic plate.

In this way, one large-size molding body was produced using the calcined preforms as divisional parts and this molding was dried and then sintered in air at 1,400°C for one hour to obtain an alumina molding. The alumina molding had a size of 20.8 cm × 20.8 cm × 2.0 cm and a bulk density of 0.16 g/cm³. The joint line between respective preforms was not observed at all from the outside.

Example 2 - Aluminum iso-propoxide (8.0 g) was added to 100 ml of distilled water at 80°C and hydrolyzed by stirring. After the hydrolysis, the resulting white turbid solution was cooled and adjusted to a pH of 2 by adding dilute hydrochloric acid while stirring. Thereafter, the solution was peptized by continuously stirring it for 4 hours to produce a transparent aluminum-hydroxide sol solution. To this solution, 100 g of alumina powder having an average particle size of 0.2 µm was added and mixed together with silicon nitride balls for 20 hours. To the slurry after mixing, 10 ml of a 20 wt% saponin solution was added. Then, the slurry was foamed by a household whisk until the volume became 10 times or more to produce a foamed slurry having meringue-like foams.

This foamed slurry was filled in 1 disk-like mold and 4 ring-like molds, the inside of each mold being previously coated with p-dichlorobenzene. Thereafter, the foamed slurry was dried and then calcined in air in the same manner as in Example 1 to produce 1 disk-like calcined preform having a diameter of 10 cm and a height of 2 cm and 4 ring-like calcined preforms having an outer diameter of 10 cm, an inner diameter of 6 cm and a height of 2 cm.

These 4 ring-like calcined preforms and 1 disk-like calcined preform were joined with each other using the foamed slurry to produce a molding like a crucible (or like a hollow cylinder with a bottom) having an outer diameter of 10 cm, an inner diameter of 6 cm and a height of 10 cm. The foamed slurry protruded was smoothed using a plastic plate.

This molding was dried and then sintered in air at 1,500°C for one hour to obtain a crucible-like alumina molding.

Comparative Example - Aluminum iso-propoxide (8.0 g) was added to 100 ml of distilled water at 80°C and hydrolyzed by stirring. After the hydrolysis, the resulting white turbid solution was cooled and adjusted to a pH of 2 by adding dilute hydrochloric acid while stirring. Thereafter, the solution was peptized by continuously stirring it for 4 hours to produce a transparent aluminum-hydroxide sol solution. This aqueous solution had a concentration of 2 mass% in terms of alumina solid content.

To 60 ml of this solution, 198.5 g of alumina powder having an average particle size of 0.2 µm was added to produce a slurry. The slurry produced was viscous and even when a saponin solution was added and the slurry was foamed by stirring using a household whisk, the volume was increased only to about 5 times. The slurry after foaming was molded and sintered to obtain an alumina molding. The bulk density of the obtained alumina molding was 0.75 g/cm³.

According to the present invention, a production method of a lightweight ceramic molding having a bulk density of 0.3 g/cm³ or less and a production method of a large-size or intricately shaped lightweight ceramic molding having high heat resistance can be provided.

Although the invention has been described with respect to specific embodiments, the details are not to be construed as limitations, for it will become apparent that various embodiments, changes and modifications may be resorted to without departing from the spirit and scope thereof, and it is understood that such equivalent embodiments are intended to be included within the scope of this invention. Accordingly, the scope of the invention is limited only by the scope of the appended claims.

## Claims

1. A method for producing a lightweight ceramic molding, comprising:
adding a foaming agent to a water slurry obtained by mixing a ceramic raw material powder and an aluminum-hydroxide sol solution, and stirring it to cause foaming and thereby produce a foamed slurry,
filling said foamed slurry in a mold and drying and then calcining it to produce a calcined preform,
joining a plurality of said calcined preforms using said foamed slurry to produce one molding body, and
sintering said molding.

2. A method for producing a lightweight ceramic molding, comprising:
adding a foaming agent to a water slurry obtained by mixing a ceramic raw material powder and an aluminum-hydroxide sol solution, and stirring it to cause foaming and thereby produce a foamed slurry,
filling said foamed slurry in a mold and drying and then calcining it to produce a calcined preform,
filling said calcined preform and said foamed slurry in combination in a new mold and drying it to produce one molding body, and
sintering said molding.

3. The method for producing a lightweight ceramic molding as claimed in claim 1, wherein said calcination is preformed at a temperature of 800 to 1,200°C and said sintering is preformed at a temperature of 1,200 to 1,800°C.

4. The method for producing a lightweight ceramic molding as claimed in claim 2, wherein said calcination is preformed at a temperature of 800 to 1,200°C and said sintering is preformed at a temperature of 1,200 to 1,800°C.

5. The method for producing a lightweight ceramic molding as claimed in any one of claims 1 to 4, wherein said water slurry comprises from 50 to 300 parts by mass of an aluminum-hydroxide sol solution having a concentration of 0.25 to 5 mass% in terms of an alumina solid content, per 100 parts by mass of the ceramic raw material powder.

6. The method for producing a lightweight ceramic molding as claimed in claim 3, wherein said water slurry comprises from 50 to 300 parts by mass of an aluminum-hydroxide sol solution having a concentration of 0.25 to 5 mass% in terms of an alumina solid content, per 100 parts by mass of the ceramic raw material powder.

7. The method for producing a lightweight ceramic molding as claimed in claim 4, wherein said water slurry comprises from 50 to 300 parts by mass of an aluminum-hydroxide sol solution having a concentration of 0.25 to 5 mass% in terms of an alumina solid content, per 100 parts by mass of the ceramic raw material powder.

8. The method for producing a lightweight ceramic molding as claimed in any one of claims 1, 2, 3, 4, 6 and 7, wherein the foaming agent is used in an amount of 0.25 to 5 parts by mass per 100 parts by mass of the aluminum-hydroxide sol solution.

9. The method for producing a lightweight ceramic molding as claimed in claim 6, wherein the foaming agent is used in an amount of 0.25 to 5 parts by mass per 100 parts by mass of the aluminum-hydroxide sol solution.

10. The method for producing a lightweight ceramic molding as claimed in claim 7, wherein the foaming agent is used in an amount of 0.25 to 5 parts by mass per 100 parts by mass of the aluminum-hydroxide sol solution.

11. The method for producing a lightweight ceramic molding as claimed in any one of claims 1, 2, 3, 4, 6, 7, 9 and 10, wherein the aluminum-hydroxide sol solution is an aqueous solution obtained by hydrolyzing and then peptizing aluminum alkoxide.
